# EUROPEAN PATENT APPLICATION

(11) **EP 1 293 127 A2**
(43) Date of publication of application: **19.03.2003**
(21) Application number: 02256370.4
(22) Date of filing: 13.09.2002
(51) Int. Cl.: A21B 1/26, A21B 1/48

(54) **Cooking oven having curved heat exchanger**

(30) Priority: 14.09.2001 US 954504
(71) Applicant: FMC Technologies, Inc., Chicago, IL 60601 (US)
(72) Inventor: Gunawardena, Ramesh M., Chagrin Falls, Ohio 44023 (US); McVeagh, Charles, Huron, Ohio 44839 (US); Stacy, Robert M., Sandusky, Ohio 44870 (US); Kane, Scott M., Sandusky, Ohio 44870 (US)
(74) Representative: Hammler, Martin Franz

(57) **Abstract**

A cooking oven (10) includes a housing (12) that encloses a chamber (30) having an inlet (17) and an outlet (19). A conveyor (40) extends between the inlet and the outlet and through the chamber (30). The cooking oven additionally includes a fluid distribution system (50) positioned in fluid communication with the chamber and a curved heat exchanger (60) positioned in fluid communication with the chamber, fluid being circulated from the camber (30) through the curved heat exchanger (60) and fluid distribution system (50).

## Description

### BACKGROUND OF THE INVENTION

### Field of the Invention

This invention relates to a chamber containing a heat exchanger, particularly a cooking oven or chiller for cooking/chilling of food products.

### Description of Prior Art

Linear cooking ovens for cooking food typically include a conveyor or conveyor belt for conveying food to be cooked from an inlet to an outlet and through a cooking chamber. A heat source, fluid mover and heat exchanger are typically provided within the cooking chamber for cooking the food provided on the conveyor.

Existing linear cooking ovens are typically difficult to maintain and clean because of condensate, oil droplets and other fluids and particles that may accumulate in and around the heat exchanger. As a result, costly line interruptions and/or disassembly are necessary to maintain the rigid hygienic standards required for such linear cooking ovens. Cleaning and maintenance on existing linear cooking ovens often involves heat exchangers that fold or rotate into a cleaning position thereby requiring flexible hoses, connections and other components to permit ease of movement of the heat exchanger.

In addition, a uniform and consistent cooking environment is difficult to maintain in existing cooking ovens because of a lack of proper fluid flow, recirculation, heat exchange and other factors.

### SUMMARY OF THE INVENTION

A linear cooking oven/chiller according to one preferred embodiment of this invention is preferably a modular oven/chiller which may have any desired number of interchangeable modules. The cooking oven/chiller preferably includes a housing having an inlet and an outlet and an enclosed chamber. A conveyor extends between the inlet and the outlet and through the chamber.

A fluid distribution system is positioned in fluid communication with the chamber and may include one or more blowers or other devices for circulating conditioned fluid (e.g. air or steam or mixtures of them) throughout the chamber. The fluid distribution system is preferably positioned above the conveyor and adjacent a curved heat exchanger. The curved heat exchanger directs fluid from the fluid distribution system through the chamber and across the conveyor. The curved heat exchanger preferably includes a fluid inlet and a fluid outlet positioned in a non-linear relationship relative to the fluid inlet with at least a partially curved surface between the fluid inlet and the fluid outlet.

As a result of the described configuration of the cooking oven/chiller, the curved heat exchanger preferably directs fluid flow from a top portion of chamber to a lower portion of chamber and across the conveyor. One or more fluid manifolds are preferably connected with respect to the cooking oven/chiller so as to more precisely direct fluid flow from the fluid distribution system to the conveyor. Preferably, a plurality of fluid manifolds are positioned along the conveyor, preferably both above and below the conveyor.

Each fluid manifold includes a pair of sidewalls extending between a back wall and an inlet of the respective fluid manifold. A pair of outlet nozzles preferably extend along a length of each fluid manifold between the back wall and the inlet. In addition, in an alternate embodiment of this invention, an angled surface within each outlet nozzle preferably extends along a length of the fluid manifold. In arrangements of multiple fluid manifolds, each fluid manifold is spaced apart from each adjacent fluid manifold to create a fluid gap between sidewalls of adjacent fluid manifolds. Fluid directed through the fluid manifolds impinges on the food items on the conveyor where heat is drawn out into the food items. The cooled return fluid is then delivered through the fluid distribution system. Return fluid from the conveyor is delivered through the plurality of fluid gaps between the fluid manifolds.

According to one preferred embodiment of this invention, the cooking oven/chiller further includes a damper system comprising a plurality of louvers connected with respect to at least one upper manifold and at least one lower manifold. The plurality of louvers is adjustable to control the fluid flow between the upper manifold and the lower manifold. A manual or electronic adjustment arm may be affixed with respect to the plurality of louvers to route air flow between the upper manifold and the lower manifold. Preferably, when at least one louver in the upper manifold is opened, at least one other corresponding louver is closed in the lower manifold.

In its preferred embodiments, this invention therefore provides a cooking oven/chiller with uniform and controllable cooking conditions within a cooking chamber and/or along a conveyor.

It is another preferred feature of this invention to provide a cooking oven/chiller having components that are modular.

It is another preferred feature of this invention to provide a cooking oven/chiller which is easily cleaned.

It is still another preferred feature of this invention to provide a cooking oven/chiller that separates the heat exchanger from the conveyor so that food on the conveyor is not contaminated by discharge and/or accumulations on the heat exchanger.

It is yet another preferred feature of this invention to provide a cooking oven/chiller that utilizes return fluid from the conveyor into continuous cycles of fluid flow through a fluid distribution system.

### BRIEF DESCRIPTION OF THE DRAWINGS

The above-mentioned and other features and advantages of this invention will be better understood from the following detailed description taken in conjunction with the drawings wherein:
Fig. 1 is a side view of a cooking oven/chiller according to a first preferred embodiment of this invention;
Fig. 2 is a top view of the cooking oven/chiller shown in Fig. 1;
Fig. 3 is a front view of the cooking oven/chiller shown in Fig. 1;
Fig. 4 is top view of a heat exchanger according to one preferred embodiment of this invention;
Fig. 5 is a front view of the heat exchanger shown in Fig. 4;
Fig. 6 is a side view of the heat exchanger shown in Fig. 4;
Fig. 7 is a cross-sectional view of a portion of the heat exchanger shown in Fig. 5 according to one preferred embodiment of this invention;
Fig. 8 is a top view of a cooking oven/chiller according to another preferred embodiment of this invention;
Fig. 9 is a side view of the cooking oven/chiller shown in Fig. 8;
Fig. 10 is a front view of the cooking oven/chiller shown in Fig. 8;
Fig. 11 is a side view of a manifold according to one preferred embodiment of this invention;
Fig. 12 is a bottom view of the manifold shown in Fig. 11;
Fig. 13 is a top view of the manifold shown in Fig. 11;
Fig. 14 is a front view of the manifold shown in Fig. 11;
Fig. 15 is a side perspective view of the manifold shown in Fig. 11;
Fig. 16 is a front perspective view of a portion of a cooking oven/chiller including a plurality of manifolds according to one preferred embodiment of this invention;
Fig. 17 is a side view of an upper manifold and a lower manifold according to one preferred embodiment of this invention;
Fig. 18 is a side perspective view of a portion of a cooking oven/chiller including a plurality of louvers according to one preferred embodiment of this invention; and
Fig. 19 is a front schematic view of the cooking process according to one preferred embodiment of this invention.

### DESCRIPTION OF PREFERRED EMBODIMENTS

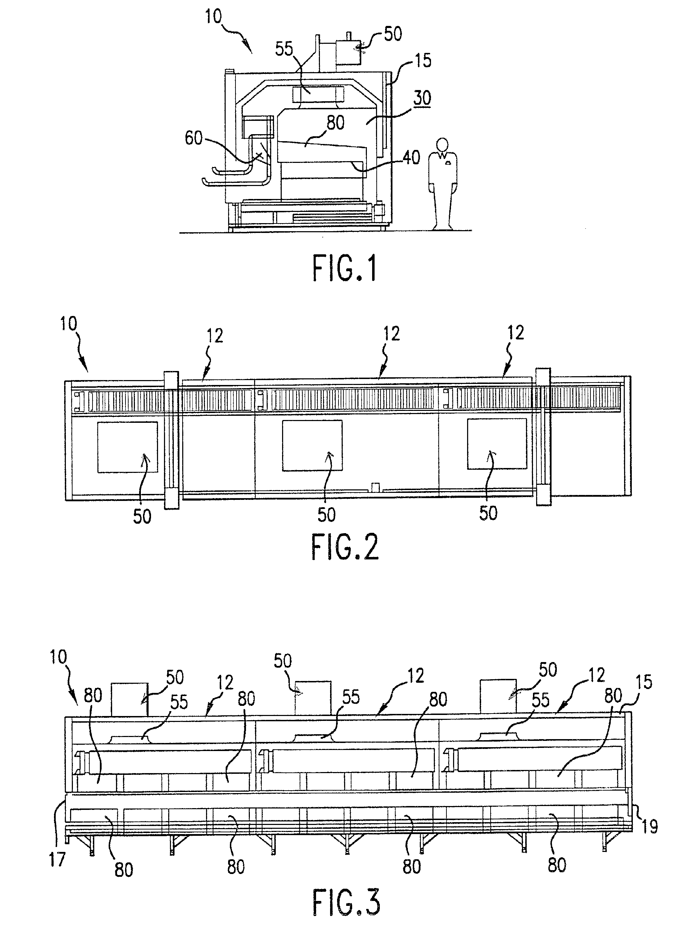

Figs. 1-3 show a linear cooking oven/chiller according to a first preferred embodiment of this invention. Cooking oven/chiller 10 is preferably a modular oven which may have any desired number of modules 12 joined together in an end-to-end relationship. Cooking oven 10 having three modules 12 is shown for purposes of illustration.

As shown, cooking oven 10 includes housing 15 having inlet 17 and outlet 19. Housing 15 encloses chamber 30, namely a cooking chamber. Conveyor 40, preferably a conveyor belt or similar device known to those having ordinary skill in the art, extends between inlet 17 and outlet 19 and through chamber 30. Conveyor 40 is preferably a pervious belt thus permitting air, other gases, vapour and liquid to flow through.

According to preferred embodiments of this invention, conveyor 40 operates continuously whenever cooking oven 10 is in operation. Thus, cooking oven 10 may be referred to as a continuous oven. Uncooked food is loaded onto conveyor 40 continuously at inlet 17 and transported through one or more modules 12 in succession, and emerges cooked, at the outlet end of the oven. As the food passes through cooking oven 10, the individual modules 12 may operate either under the same or different cooking conditions. Since each individual module 12 contains distinct components as described herein, each individual module 12 may be tuned differently to create different cooking or chilling environments and conditions. For example, one module 12 may be operated with steam only and a subsequent module 12 may be operated with a mixture of hot air or gas and steam at a higher temperature than the first module 12. As such, according to one alternative embodiment of this invention, the first module 12 may be operated as a preheat module and a last module 12 may be operated as a cool-down module, although for greater efficiency it is preferable to preheat the food product before entering cooking oven 10 and cool down the food product after exiting cooking oven 10.

Additionally, one or more modules 12 may operate with a damper system directing heated fluid, e.g. air, to an upper manifold (as described below), one or more modules 12 may operate with the damper system directing heated fluid to a lower manifold (described below), and one or more modules 12 may operate with heated fluid directed to both the upper manifold and lower manifold, to provide overall optimum cooking of the food items. However, according to a preferred embodiment of this invention, each module 12 will direct heated fluid to the upper manifold and lower manifold equally. According to an alternative three module 12 embodiment, a first and a third module 12 will direct heated fluid such as air to the upper manifold and a second module 12 will direct fluid to the lower manifold.

As shown in Figs. 1-3, fluid distribution system 50 is positioned in fluid communication with chamber 30. Fluid distribution system 50 preferably includes one or more fans, blowers 55 or other devices for circulating conditioned air or other suitable fluid to manifolds 80 which upon impinging on food items returns through fluid distribution system 50. Fluid distribution system 50 may include a combination of forced draft air flow and induced air flow to generate proper and uniform conditions throughout cooking oven 10. As indicated in Fig. 1, one or more curved heat exchangers 60 (further described below) are positioned in the fluid distribution system 50 and each have an inlet positioned to receive fluid from the blowers 55 and an outlet for delivering conditioned fluid to the manifolds 80 (only upper manifolds 80 being visible in Fig. 1). The heat exchanger 60 may be supplied with a suitable heat transfer medium, e.g. hot oil if used for heating the fluid in the chamber 30, or a suitable coolant, if the module 12 concerned is to serve as a chiller. As shown in Figs. 1-3, the blowers 55 and their associated drive motors are positioned at the top of the modules 12.

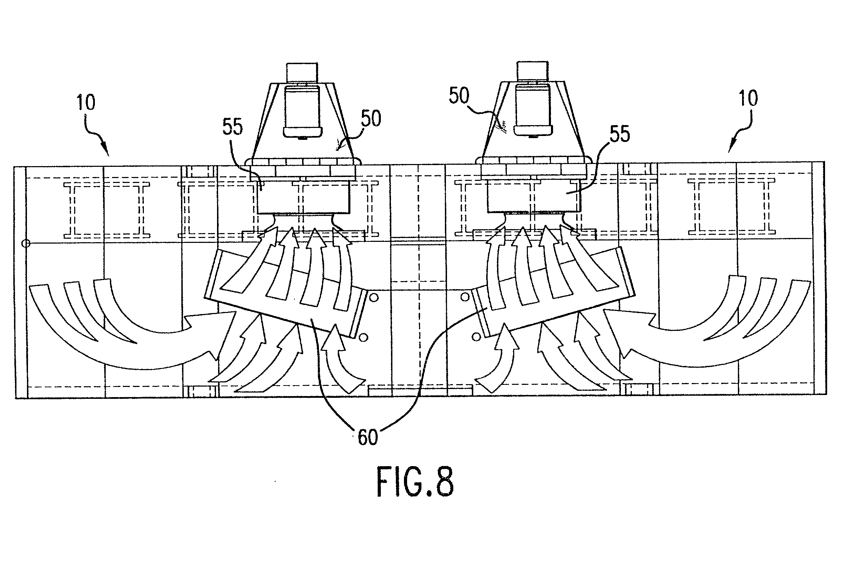

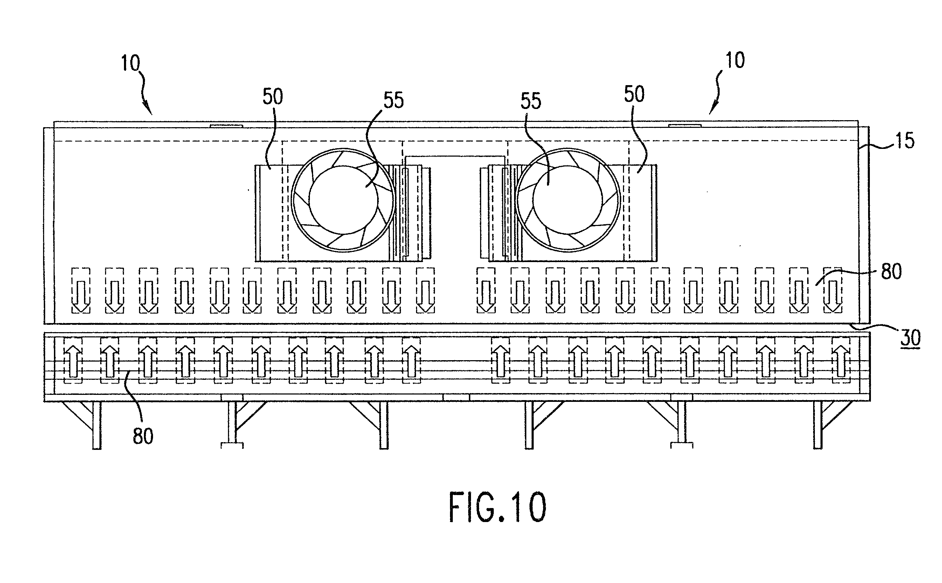

In another preferred embodiment shown in figures 8, 9 and 10, the blowers 55 of the fluid distribution system 50, and their drive motors, are positioned at the front of the modules 12, above conveyor 40. In this embodiment, the heat exchangers are arranged obliquely to the conveyor 40, in an upper part of the chamber 30. The heat exchangers 60 in this embodiment have inlets arranged to receive fluid from the chamber 30, which has been exhausted from the manifolds 80 and impinged on the food items on the conveyor 40 to heat or chill them. Outlets from the heat exchangers 60 deliver heated/cooled fluid to the blowers 55, from where the fluid is delivered through the manifolds 80 and onto the food items.

As used in this specification and claims, fluid flow is defined as air, vapor, gas and/or other suitable fluid used to circulate through cooking oven 10. According to one preferred embodiment of this invention, fluid flow comprises steam.

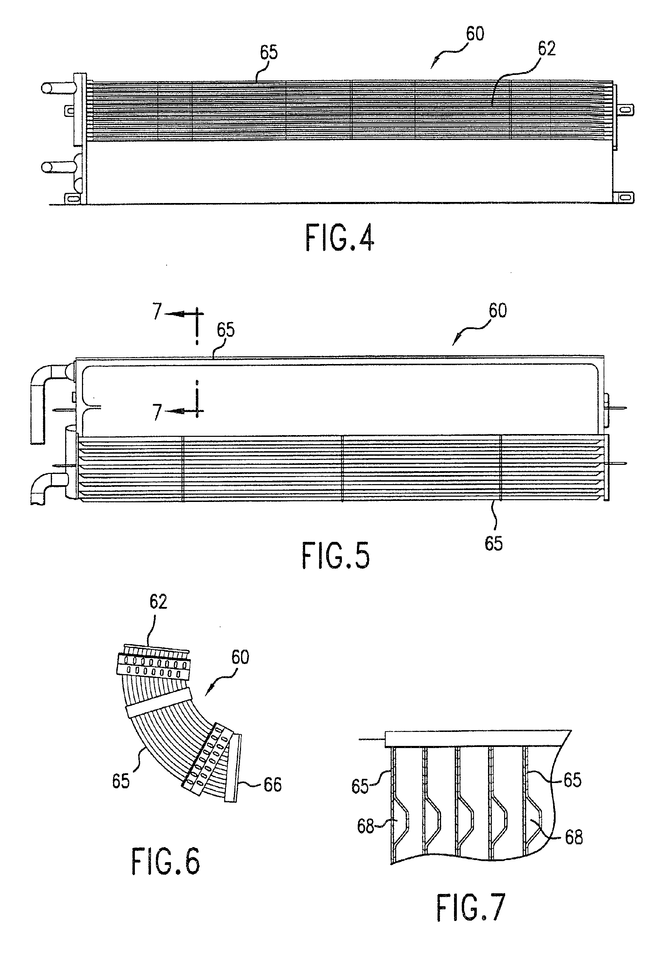

Thus curved heat exchanger 60, for instance as shown in Figs. 4-7, may be positioned in fluid communication with chamber 30, as shown in Figs. 8-10. Alternatively, curved heat exchanger 60 may direct fluid from the fluid distribution system 50 through the manifolds 80 and across conveyor 40, as shown in Figs 1-3.

According to one preferred embodiment of this invention and as shown in Figs. 4-7, curved heat exchanger 60 includes fluid inlet 62 and fluid outlet 66. Fluid inlet 62 is preferably positioned in at least approximately a 90° relationship relative to fluid outlet 66 with at least a partially curved surface between fluid inlet 62 and fluid outlet 66.

According to one preferred embodiment of this invention, a plurality of curved plates 65 are positioned between fluid inlet 62 and fluid outlet 66. The plurality of curved plates 65 preferably extend generally parallel with respect to each other for at least a portion, if not all, of the a length of curved heat exchanger 60.

As shown in cross-section in Fig. 7, curved plates 65 may include a hollow portion or channel 68 for containing and transporting a thermal fluid, such as oil. One channel 68 may adjoin each curved plate 65 as shown. The fluid passing through channels 68 serves to elevate (or chill) the heat exchanger plates 65 to a desired temperature or temperature range. A wide variety of heat transfer fluids may be passed through channels 68, including various types of heating oils, "wet" steam, super heated steam or chilled water. Alternatively, plates 65 may be heated by another means such as electrical induction.

According to one preferred embodiment of this invention, curved heat exchanger 60 may be cleaned by raising and/or lowering a hood and/or housing 15 to access curved heat exchanger 60. Alternatively, and in contrary fashion to the preferred embodiment of this invention, cooking oven 10 may include an apparatus for raising and/or lowering curved heat exchanger 60 to provide easy access for cleaning, servicing, etc.

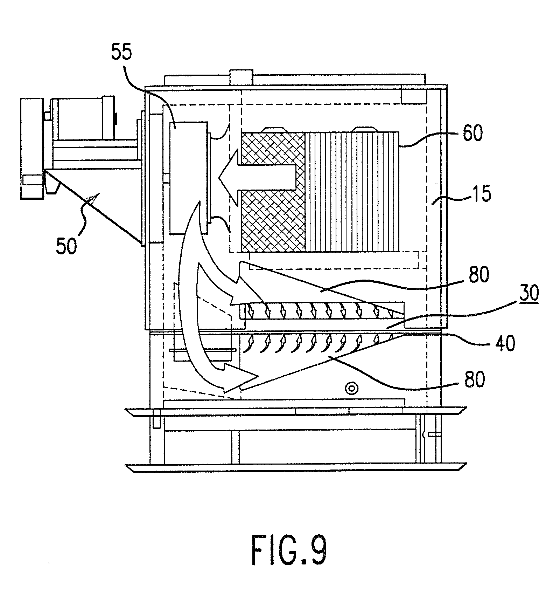

As a result of the described configuration of cooking oven 10, curved heat exchanger 60 preferably directs fluid flow from a top portion of chamber 30 to a lower portion of chamber 30 and across conveyor 40. As such, curved heat exchanger 60 extends vertically from fluid inlet 62 and horizontally from fluid outlet 66. As shown in Figs. 1-3, curved heat exchanger 60 may thereby direct fluid flow from fluid inlet 62 facing an upper portion of chamber 30 and through fluid outlet 66 facing conveyor 40 so that fluid inlet 62 is positioned at approximately a right angle relative to fluid outlet 66. As shown in figs. 8 and 9, the inlet may be positioned facing generally downwardly, obliquely to the conveyor 40, with the outlet facing generally transversely towards the blowers 55.

According to one preferred embodiment of this invention, curved heat exchanger 60 is positioned for the most part or entirely outside of a vertical boundary defined by edges of conveyor 40. As a result of such a configuration, conveyor 40, and food thereon, will not be contaminated by dripping oil, water and other contaminants.

A primary advantage of curved heat exchanger 60 in the Figure 1 configuration is its ability to direct the flow of heated/cooled fluid to the fluid manifolds in a horizontal or nearly horizontal direction while simultaneously relying on gravity and fluid flow to facilitate cleaning between heat exchanger plates 65. Because portions of curved heat exchanger 60 are vertical or nearly vertical, oil droplets and other contaminants which are collected between plates 65 tend to flow downward, and are discharged from the downstream end of curved heat exchanger 60 instead of accumulating between plates 65. The useful operating time, which is the time between shutdowns of cooking oven 10 for cleaning and maintenance of the heat exchanger, is greatly increased when curved heat exchanger 60 of the invention is used, as opposed to a conventional tube and fin or other heat exchangers. Also, the curved configuration of curved plates 65 allows for a more compact fit of curved heat exchanger 60 within cooking oven 10. The heat exchanger configuration of Figures 8-10 also allows for drainage of surface contaminants by gravity.

Curved heat exchanger 60 may be curved along the entire length of plates 65 as shown in Fig. 6. Alternatively, curved heat exchanger 60 need not be curved along the entire length of plates 65, so long as there is at least one curved portion or corner. For instance, curved plates 65 may have a straight portion and a curved portion, a straight portion and two curved portions, two straight portions and a curved portion, and so on.

Curved heat exchanger 60 may include plates 65 which are curved at an angle of 90 degrees as shown in Fig 6. Alternatively, depending upon the application, the total angle of curvature may range between about 20-180 degrees, suitably between about 30-150 degrees, likely between about 45-135 degrees, desirably between about 60-120 degrees. The total angle of curvature may be defined as the angular difference between plates 65 at fluid inlet 62 and fluid outlet 66 of curved heat exchanger 60. This way, if curved heat exchanger 60 has more than one curved portion, the curvatures of the multiple portions are added together to arrive at the total angle of curvature for curved heat exchanger 60. The radius or radii of curvature may also vary, depending on the size and shape of cooking oven 10.

Depending upon the flow pattern of fluid within cooking oven 10, curved heat exchanger 60 may be positioned in various parts of cooking oven for optimum performance. To facilitate self-cleaning of curved heat exchanger 60, with the aid of gravity andfluid flow, fluid inlet 62 should preferably be at a higher elevation than fluid outlet 66, as shown in Fig. 6, for instance.

Generally speaking, in the arrangement shown in Figs. 1-3, chamber 30 preferably includes a platform in line with the fluid distribution system, a fluid mover positioned over the platform and curved heat exchanger 60 positioned adjacent to the platform and redirecting fluid from the fluid mover across the platform. According to such an embodiment, the platform may comprise conveyor 40, cooking/chilling surface, or any other surface requiring redirected heat from a fluid mover and/or heat/cooling source at another location with chamber 30.

More specifically, according to one preferred embodiment of this invention, curved heat exchanger 60 is positioned adjacent conveyor 40 and directs fluid from above conveyor 40 through chamber 30 and preferably through a damper system and/or a plurality of manifolds, as described in more detail below, whereupon such fluid is impinged on the food items and the used return fluid is then delivered through the fluid distribution system.

### MANIFOLD SYSTEM

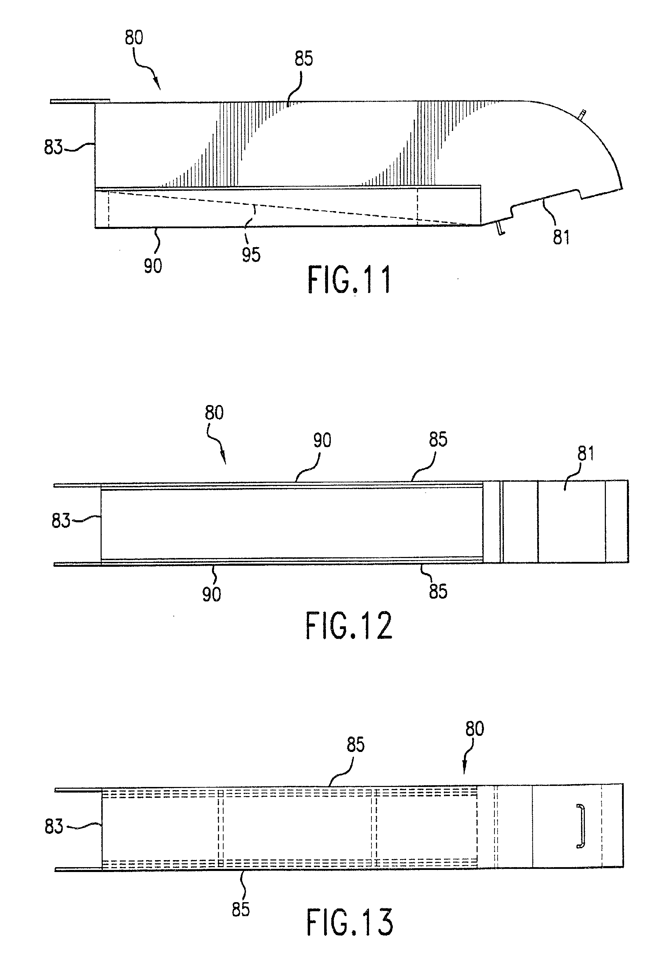

Figs. 11-15 show various views of fluid manifold 80 according to one preferred embodiment of this invention. Fluid manifold 80 is preferably connected with respect to cooking oven/chiller 10 so as to direct fluid flow from fluid distribution system 50 to conveyor 40.

According to one preferred embodiment of this invention, a plurality of fluid manifolds 80 are positioned along conveyor 40, preferably above and below conveyor 40. One or more fluid manifolds 80 are preferably positioned within each module 12 of cooking oven/chiller 10 thereby permitting free and compatible exchange/addition/subtraction of modules 12 within cooking oven/chiller 10.

Fluid manifold 80 includes a pair of sidewalls 85 extending between back wall 83 and inlet 81. A pair of outlet nozzles 90 preferably extend along a length of each fluid manifold 80 between back wall 83 and inlet 81.

In addition, according to an advantageous embodiment of this invention, an angled surface 95 constitutes a floor of fluid manifold 80 between the outlet nozzles 90, and extends along a length of fluid manifold 80. According to one preferred embodiment of this invention, the angled surface 95 extends between the outlet nozzles 90 from inlet 81 to a lower half of back wall 83 of fluid manifold 80. Angled surface 95 helps to ensure an even or uniform fluid pressure along the length of fluid manifold 80, resulting in more uniform velocity of fluid ejected along the length of nozzles 90. If angled surface 95 of fluid manifold 80 were horizontal instead of angular, the fluid pressure and velocity would be higher at locations closer to inlet 81, and lower closer to back wall 83. Angled surface 95 helps overcome the variable fluid pressure that would otherwise exist based on the distance from inlet 81.

Angled surface 95 extending across outlet nozzle 90 preferably equalizes a pressure of the conditioned fluid across angled surface 95 thereby creating a uniform fluid flow out of outlet nozzle 90 and across a width of conveyor 40. Uniform fluid flow is important for uniform conditions within cooking oven/chiller 10. Depending upon the application, angled surface 95 may have an angle of about 5 to 50 degrees from horizontal, suitably about 10 to 40 degrees, desirably about 15 to 30 degrees.

As shown most clearly in figure 11, according to one preferred embodiment of this invention wherein fluid manifolds 80 are positioned over conveyor 40, inlet 81 and the pair of outlet nozzles 90 of each fluid manifold 80 extend in substantially the same direction. Therefore, fluid flow is directed upwardly into inlet 81 from fluid distribution system 50 and then across fluid manifold 80 and back downward through outlet nozzles 90 across the length of fluid manifold 80.

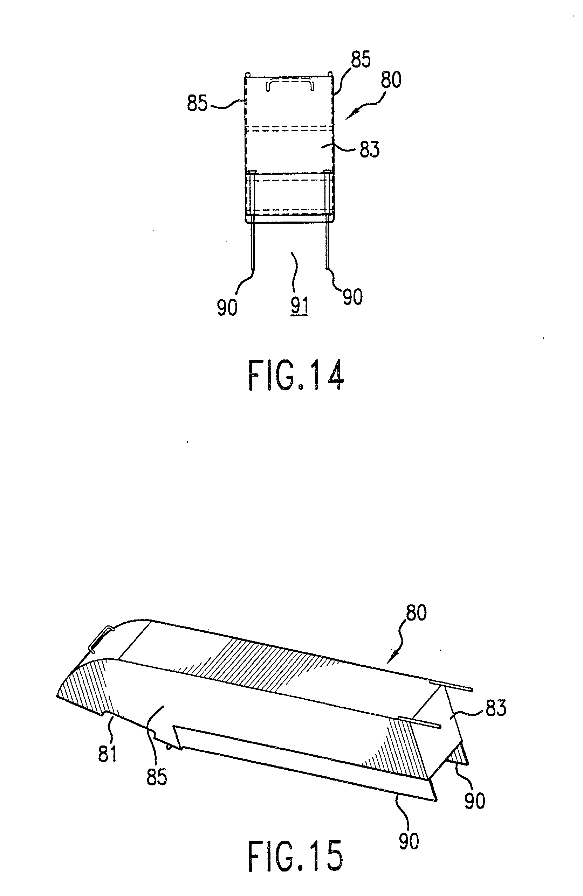

Each fluid manifold 80 includes a rectangular space 91, Fig. 14, resembling a three-sided box, open at the bottom (toward conveyor 40), between nozzles 90. Some of the heated fluid which leaves nozzles 90 contacts the food items and/or conveyor 40, then deflects upward into the space 91, where it is carried back down by the venturi effect of the heated fluid leaving nozzles 90. This recirculation of heated fluid helps to mix the cooking fluid and facilitates more uniform cooking.

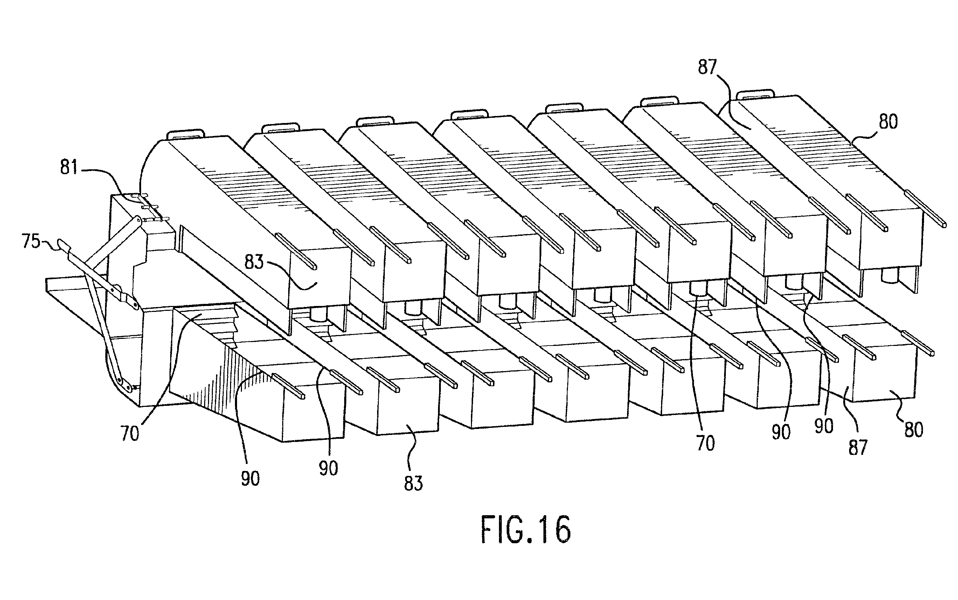

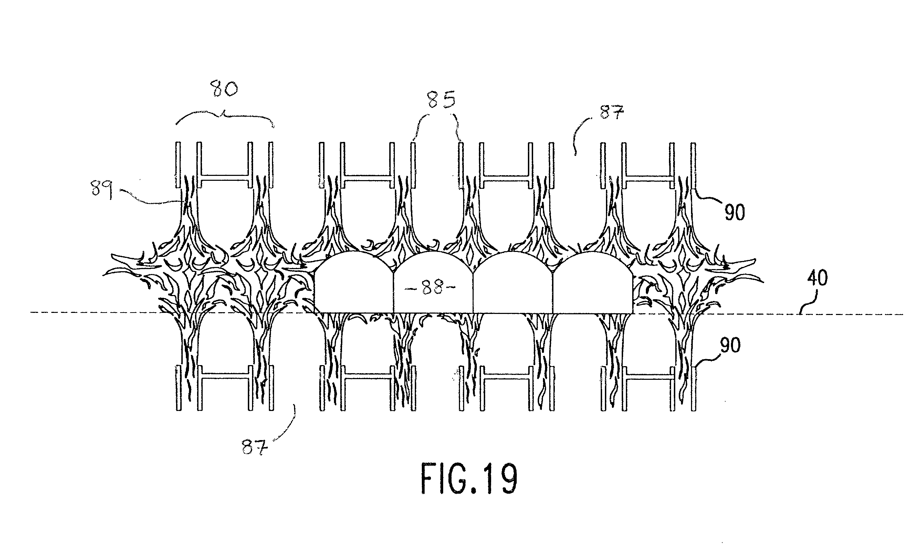

In arrangements of multiple fluid manifolds 80, such as shown in Figs. 16 and 19, each fluid manifold 80 is spaced apart from each adjacent fluid manifold 80 to create a fluid gap 87 between sidewalls 85 of adjacent fluid manifolds 80. Return fluid from conveyor 40 is preferably delivered through a plurality of fluid gaps 87 between sidewalls 85 of adjacent fluid manifolds 80 in cooking oven/chiller 10.

According to one preferred embodiment of this invention, each outlet nozzle 90 comprises a narrower opening than either a width of fluid gap 87 or a width of fluid manifold 80. A relatively narrow opening of each outlet nozzle 90 results in concentrating heating and/or cooling of the food product 88 positioned on conveyor 40. The resulting hot/cool fluid jets 89 directed in the vicinity of the conveyor 40 and food items 88 are schematically shown in Fig. 19.

In one particular embodiment of this invention, air manifolds 80 are spaced approximately 152mm (6") apart from each other. In such embodiment, fluid manifolds 80 above conveyor 40 include outlet nozzles 90 spaced approximately 254mm (10") apart from each other within each fluid manifold 80. In yet another embodiment, fluid manifolds 80 are spaced approximately 203mm (8") apart from each other and outlet nozzles 90 are spaced approximately 203mm (8") apart from each other. Fluid manifolds 80 below conveyor 40 preferably include outlet nozzles 90 spaced approximately 64mm (2.5") apart from each other within each fluid manifold 80.

### DAMPER SYSTEM

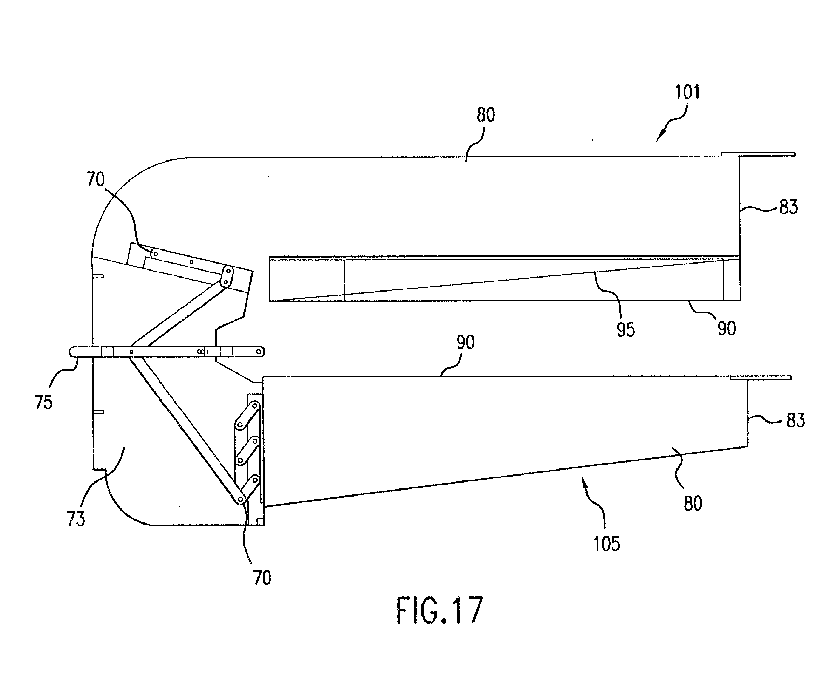

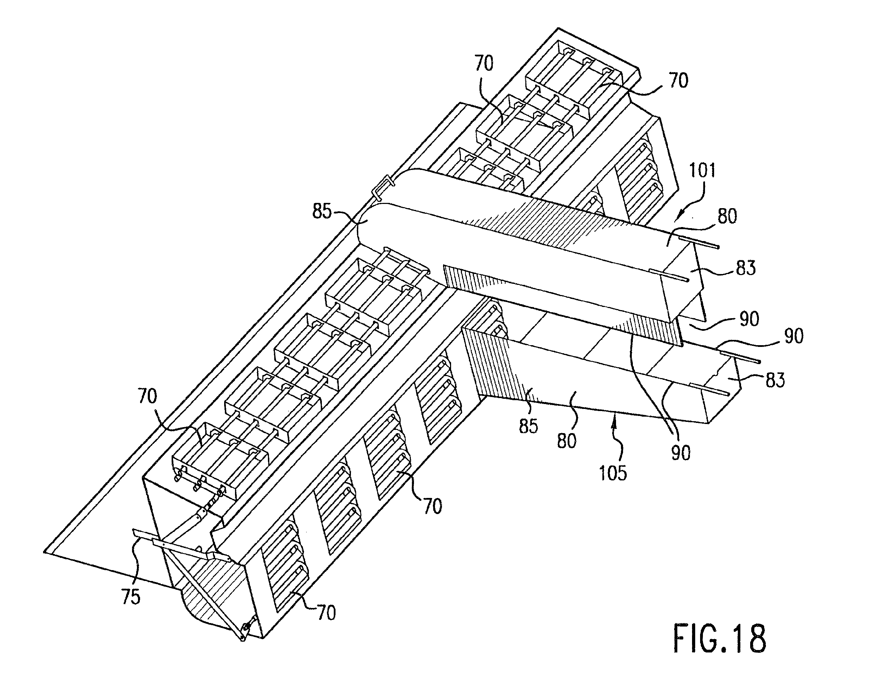

According to one preferred embodiment of this invention shown in Figs. 17 and 18, cooking oven/chiller 10 further includes a damper system comprising a plurality of louvers 70 connected with respect to upper manifold 101 and lower manifold 105, the plurality of louvers 70 adjustable to control the fluid flow between the upper manifold 101 and lower manifold 105.

As shown in Fig. 18, adjustment arm 75 may be additionally connected with respect to the plurality of louvers 70. Adjustment arm 75 preferably opens at least one louver of the plurality of louvers 70 and correspondingly closes at least one other louver of the plurality of louvers 70 to control fluid flow between upper manifold 101 and lower manifold 105. Adjustment arm 75 may be manually controlled or electronically controlled.

As best shown in Fig. 17, inlet manifold 73 is preferably connected with respect to the plurality of louvers 70 to route fluid flow including return fluid from conveyor 40 and primary fluid from heat exchanger 60. Because of the described arrangement of recirculated fluid, this invention necessarily requires primary fluid from heat exchanger 60 and return fluid from conveyor 40. The plurality of louvers 70 preferably extend along at least a portion of a length of the conveyor 40.

As shown in Fig. 18, a first plurality of louvers 70 may be arranged in an array across upper manifold 101 and a second plurality of louvers 70 may be arranged in an array across lower manifold 105. The first plurality of louvers 70 and the second plurality of louvers 70 may be arranged in subgroups across upper manifold 101 and lower manifold 105, respectively. For instance, as shown in Fig. 18, subgroups of three louvers 70 may be positioned in an array across upper manifold 101 and/or lower manifold 105.

As a result of the described arrangement of louvers 70, fluid flow is directed and controlled through and between the plurality of louvers 70 connected with respect to upper manifold 101 and the lower manifold 105. Preferably, when at least one louver 70 in upper manifold 101 is opened, at least one other corresponding louver 70 is closed in lower manifold 105 thereby controlling fluid flow between the upper manifold 101 and the lower manifold 105. More specifically, as an array of louvers 70 is opened in upper manifold 101, a corresponding array of louvers 70 is closed in lower manifold 105.

One advantage of this arrangement is that the total heated/chilled fluid flow can be maintained at a constant rate in a given module 12. The damper system directs the heated/cooled fluid to upper manifold 101, lower manifold 105, or a desired combination of both, without changing the total amount of heated/cooled fluid supplied for cooking/chilling. Thus, the amount of fluid can be fixed and controlled at a predetermined rate as desired to give the optimum level of overall cooking or chilling. The damper system can be used to direct fluid to upper and lower manifolds 101, 105 as desired to ensure that the cooking/chilling is substantially uniform and even.

While in the foregoing specification this invention has been described in relation to certain preferred embodiments thereof, and many details have been set forth for purpose of illustration, it will be apparent to those skilled in the art that this invention is susceptible to additional embodiments and that certain of the details described herein can be varied considerably without departing from the basic principles of the invention as defined in the claims.

## Claims

1. A cooking oven or chiller (10) comprising:
a housing having an inlet (17) and an outlet (19), said housing enclosing a chamber (30);
a conveyor (40) extending between the inlet and the outlet and through the chamber;
a fluid distribution system (50) positioned in fluid communication with the chamber;
**characterised in that** a curved heat exchanger (60) is positioned in fluid communication with the chamber,
fluid being circulated from the camber (30) through the curved heat exchanger (60) and fluid distribution system (50).

2. The cooking oven/chiller of Claim 1 further **characterised in that** the fluid distribution system (50) comprises a blower (55) positioned above the conveyor (40).

3. The cooking oven/chiller of Claim 1 or 2 further **characterised in that** the curved heat exchanger (60) includes a fluid inlet (62) and a fluid outlet (66), the fluid inlet positioned in at least approximately a 90 degrees relationship relative to the fluid outlet.

4. The cooking oven/chiller of any preceding Claim, further **characterised in that** the curved heat exchanger (60) comprises a plurality of curved plates (65).

5. The cooking oven/chiller of Claim 4 wherein at least one of the curved plates (65) contains a thermal fluid.

6. The cooking oven/chiller of any preceding Claim, further **characterised in that** the curved heat exchanger (60) is positioned substantially outside of a vertical boundary defined by edges of the conveyor (40).

7. The cooking oven/chiller of any preceding Claim, wherein the curved heat exchanger (60) comprises a plurality of curved plates (65) extending generally parallel with respect to each other.

8. The cooking oven/chiller of any preceding Claim, further **characterised in that** the curved heat exchanger (60) comprises a plurality of curved plates (65) that are generally curved across an entire length from the fluid inlet (62) to the fluid outlet (66).

9. The cooking oven/chiller of any of Claims 1 - 7, further **characterised in that** the curved heat exchanger (60) comprises a plurality of curved plates that include at least one generally straight portion and at least one curved portion across a length from the fluid inlet to the fluid outlet.

10. The cooking oven/chiller of any preceding Claim, further **characterised in that** the curved heat exchanger (60) comprises a plurality of curved plates (65) each having a channel (68) extending therethrough, the channel extending from the fluid inlet to the fluid outlet.

11. The cooking oven/chiller of any preceding Claim, further **characterised in that** the curved heat exchanger (60) directs fluid flow from a blower (55) to a lower portion of the chamber (30) and across the conveyor (60).

12. The cooking oven/chiller of Claim 11, further **characterised in that** the curved heat exchanger (60) extends vertically from the fluid inlet (62) and horizontally from the fluid outlet (66).

13. The cooking oven/chiller of any of Claims 1 - 10, further **characterised in that** the curved heat exchanger (60) has an inlet in fluid communication with an upper part of the chamber (30) and an outlet in fluid communication with a blower (55) of the fluid distribution system (50).

14. A cooking oven/chiller (10) as defined in any of Claims 1 - 13, further **characterised in that**:
a plurality of manifolds (80) extend above and beneath the conveyor;
the fluid distribution system is positioned generally above the manifolds and
the curved heat exchanger (60) is positioned adjacent the conveyor (40).

15. The cooking oven/chiller of Claim 14, further **characterised in that** the curved heat exchanger (60) includes an upwardly facing fluid inlet and a fluid outlet facing the conveyor (40), the fluid inlet (62) positioned at approximately a right angle relative to the fluid outlet (66).

16. The cooking oven/chiller of any of Claims 1 - 15, further **characterised by** a plurality of louvers (70) for directing fluid flow between a first plurality of manifolds (101) above the conveyor (40) and a second plurality of manifolds (105) below the conveyor (40).

17. The cooking oven/chiller of any preceding Claim, further **characterised in that** the curved heat exchanger (60) is positioned horizontally adjacent the conveyor (40).

18. The cooking oven/chiller of any preceding Claim, further **characterised in that** the curved heat exchanger (60) further includes an apparatus for adjusting a vertical position of the curved heat exchanger.

19. The cooking oven/chiller of any preceding Claim, further **characterised in that** the curved heat exchanger (60) includes a plurality of curved plates having an angle of curvature between 60-120 degrees.

20. The cooking oven/chiller of any preceding Claim, further **characterised in that** the curved heat exchanger (60) comprises a plurality of curved plates that are generally curved across an entire length of the curved heat exchanger and include an angle of curvature between 20-180 degrees.

21. A chamber (30) comprising:
a platform positioned within the chamber (30);
a fluid mover (55) positioned over the platform;
**characterised in that** a curved heat exchanger (60) is positioned adjacent to the platform, the curved heat exchanger redirecting fluid from the fluid mover across the platform.

22. The chamber of Claim 21, further **characterised in that** the platform comprises a conveyor (40).

23. The chamber of Claim 21 or 22, further **characterised in that** the curved heat exchanger (60) directs fluid flow from a vertically positioned inlet (62) to a horizontally positioned outlet (66).

24. The chamber of any of Claims 21 - 23, further **characterised in that** the curved heat exchanger (60) comprises a plurality of curved plates (65) extending generally parallel with respect to each other.
